Europäisches Patentamt

**European Patent Office**

Office européen des brevets

(11) Publication number: **0 229 748 B1**

## EUROPEAN PATENT SPECIFICATION

(45) Date of publication of patent specification: **23.09.92** (51) Int. Cl.⁵: **B23B 31/30**, B23Q 3/157

(21) Application number: **87850006.5**

(22) Date of filing: **09.01.87**

(54) **Apparatus for changing tools in machine tools.**

(30) Priority: **16.01.86 SE 8600182**

(43) Date of publication of application:
**22.07.87 Bulletin 87/30**

(45) Publication of the grant of the patent:
**23.09.92 Bulletin 92/39**

(84) Designated Contracting States:
**AT BE CH DE ES FR GB GR IT LI LU NL SE**

(56) References cited:
EP-A- 0 091 891      EP-A- 0 185 286
WO-A-82/02872       DE-A- 2 700 934
DE-A- 3 417 430      DE-A- 3 527 105
DE-C- 3 326 292      FR-A- 2 229 505
US-A- 3 478 407

(73) Proprietor: **Waco Jonsereds AB
Box 41
S-301 02 Halmstad(SE)**

(72) Inventor: **Andersson, Bengt Axel
Onsdagsgränd 8
S-302 53 Halmstad(SE)**

(74) Representative: **Lenz, Franz et al
AWAPATENT AB Box 5117
S-200 71 Malmö(SE)**

## Description

In wood-working, there is a tendency towards shorter and shorter production runs, which means that the time for tool changing increases. This entails increased costs, as will be appreciated from the following example. A usual number of tool spindles in a wood-working machine is four, and since each tool changing operation, including tool adjustment, takes about four minutes - in the case of a skilled operator - the entire change will take about sixteen minutes. Since the tools are changed five times a day on an average, the total time for tool changing will amount to about eighty minutes, i.e. more than sixteen per cent of an eight-hour working day, which will of course increase the price of the products correspondingly. Investigations have shown that downtime costs for a modern wood-working machine can be estimated at about 8,000 Swedish crowns a day. From the above it will be understood that the annual costs for tool changing operations are considerable.

In view hereof, it goes without saying that many attempts have been made to rationalize and automate the changing of tools, but with little success as yet. A considerable impediment in this context has been the very high demand for accurate repeatability in tool mounting - the tolerance is but a few $\mu$m. For this reason, the tools, e.g. the milling cutters, today are normally not mounted directly on the tool spindles but on clamping sleeves which are placed on the tool spindles and locked thereon by the supply of a pressure medium to a cavity in the sleeve for acting on the inner wall thereof so as to engage the periphery of the spindle.

The object of the present invention therefore is to provide an apparatus for automatic tool changing in machine tools, especially wood-working machines, in which the tools are fixed on tool spindles by sleeve-shaped locking means placed on each tool spindle and having a cavity in which a pressure urging the inner wall of the sleeve into engagement with the spindle can be established by the supply of pressure medium via a valve arrangement which includes a supply valve being connected to said cavity for accomplishing said supply of pressure medium, and a relief valve also being connected to said cavity. This apparatus should make it possible to change tools in but a fraction of the time required for manual tool changing. Also, the apparatus should be of a relatively simple construction and permit being incorporated without any notable constructional modification also in existing machine tools.

According to the invention, this object is achieved in that the apparatus is provided with at least one head which has an engagement device actuable into engagement with the locking means, and which is movable by means of a transport device between a position for taking up and delivering locking means, and a position adjacent at least one tool spindle in order there to deliver or take up locking means, and a valve engaging mechanism which upon activation is adapted to alternatively actuate said relief valve or said supply valve.

The invention will be described in more detail hereinbelow with reference to the accompanying drawings showing some embodiments. In the drawings,

Fig. 1 shows from above a head included in the apparatus according to the invention when engaging a locking means placed on a tool spindle;

Fig. 2 shows the head according to Fig. 1 in longitudinal section;

Fig. 3 shows the side of the head facing outwards when the head is supplied to the tool spindle;

Fig. 4 is a section taken along the line IV-IV in Fig. 3;

Fig. 5 shows a transport device for conveying heads in a horizontal plane, and

Fig. 6 shows a corresponding transport device for conveying heads in a vertical plane.

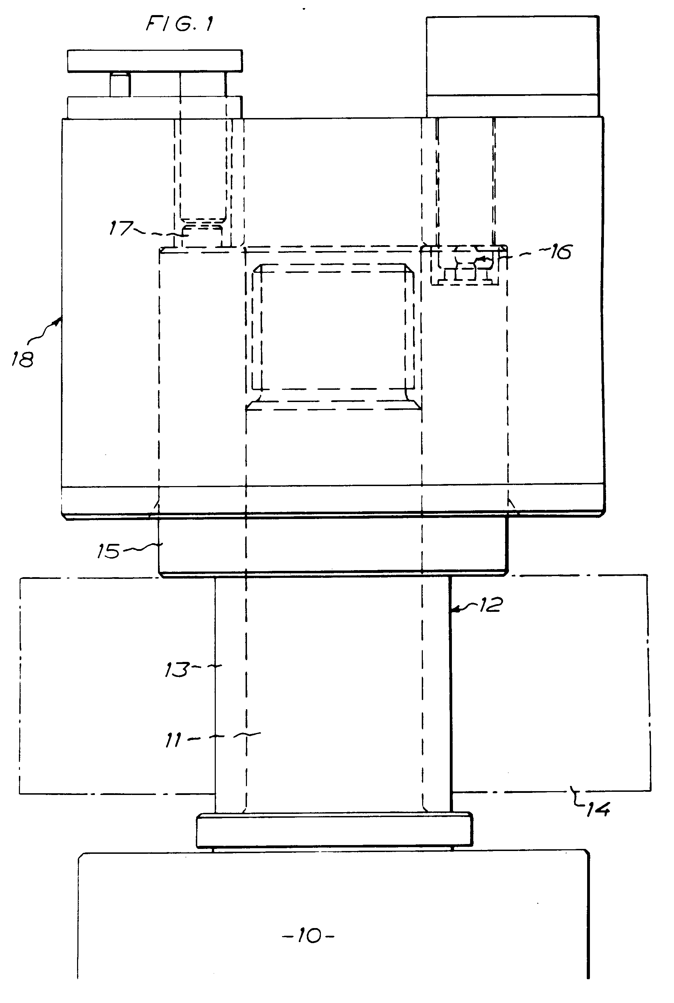

In Fig. 1, 10 designates a part of a machine tool having a tool spindle 11. On the spindle 11, there is fixed a locking means generally designated 12. The locking means 12 is sleeve-shaped and has an inner part 13 on which a tool 14, e.g. a milling cutter, is fixed, and an outer part 15 having a larger diameter. With its outwardly facing side the tool 14 engages the shoulder formed between the parts 13 and 15. The locking means 12 is clamped on the spindle 11 in a conventional manner by supplying a pressure medium to an axially elongate cavity (not shown) in the sleeve wall adjacent the inner side thereof, by means of a supply valve 16 communicating with the cavity by a channel (not shown). By the supply of pressure medium, the inner surface of the sleeve is pressed against the peripheral surface of the spindle 11, so as to ensure safe engagement. When the locking means 12 with the tool 14 should be removed, a relief valve (not shown) connected to the cavity is actuated by means of a pin 17 projecting from the outwardly oriented face of the part 15. The part 15 of the locking means 12 includes a safety device (not shown in more detail) integrated therewith and has such a length that it offers a sufficient engagement surface to the head 18 which is used for the tool change and which is the most essential feature of the invention. The purpose of the head is to pick up a locking means 12 at one location, transport it to the tool spindle 11 and place it on the spindle and thereafter lock it.

The head 18 consists of a block having a central circular opening 19 of a depth approximately corresponding to half the height of the block. The opening 19 merges via a shoulder into an opening 20 coaxial therewith which has a relatively small depth and in turn merges via a wide shoulder 21 into a third circular with which has a relatively small depth and in turn opening 22 which is coaxial with the other two openings and extends throughout the remainder of the height of the head. The opening 19 has an internal jacket 23 engaging the wall of the opening 19 and having an outwardly directed flange abutting on the end surface of the block. The jacket 23 is maintained in place by means of bolts 24 screwed in the block through holes in the flange of the jacket. The jacket 23 has an outwardly facing, elongate groove which, together with the wall of the opening 19, defines a channel 25 extending around the entire jacket. In the channel 25 opens a threaded bore 26 into which a connection to a source of pressure medium can be screwed for supplying pressure medium to the channel 25 in order, by the exertion of pressure therein, to cause the jacket to move inwardly into engagement with a part 15 of a locking means 12 (Fig. 1) introduced in the opening defined by the jacket 23.

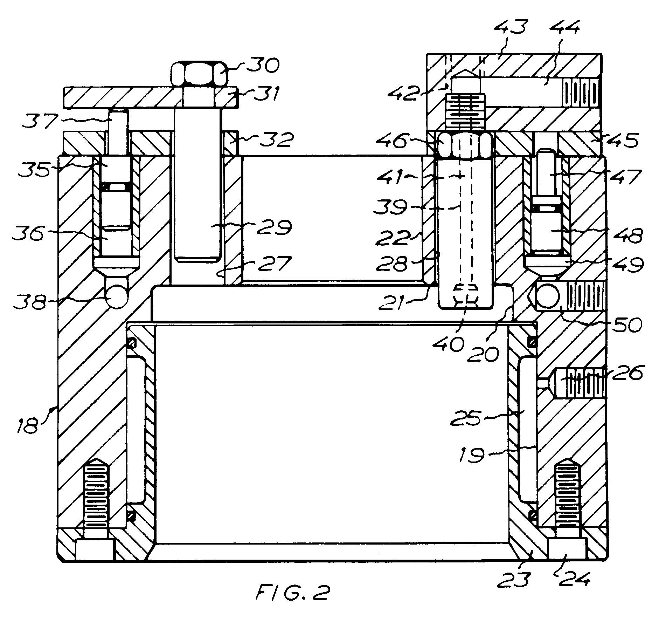

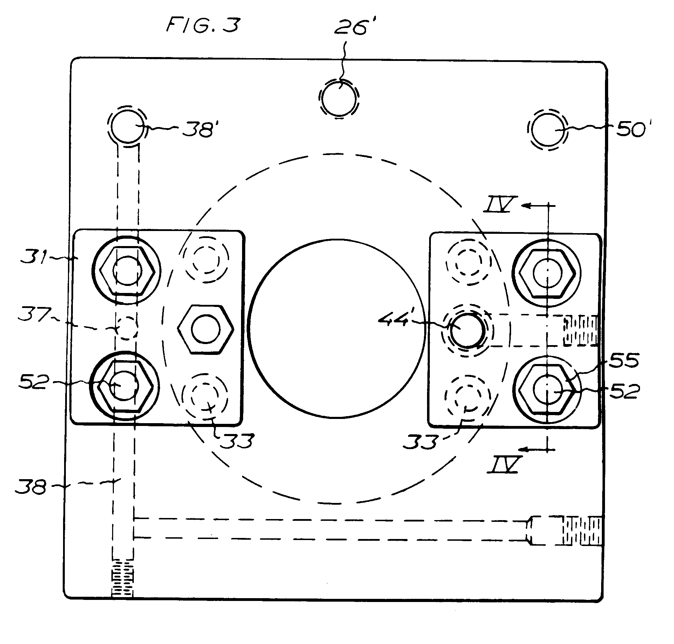

In the shoulder between the openings 20 and 22, two axial bores 27, 28 are provided diametrically opposite each other, as appears from Fig. 3. In the bore 27, a pin 29 is movable back and forth. With an upper portion having a reduced diameter and an external thread, the pin 29 is fixed by means of a nut 30 adjacent the inner edge of a rectangular plate 31. Between the plate 31 and the end surface of the block, a further plate 32 is fixed by means of countersunk bolts 33 (Fig. 3) on both sides of an opening therein through which the pin 29 extends. The plate 31 is maintained in abutment against the side of the plate 32 facing it, by means of an arrangement of bolts and springs, which will be described in more detail hereinbelow. The plate 31 with the pin 29 fixed thereon is displaceable to the position shown in Fig. 2, with the plate 31 located at a distance from the spacer plate 32, by a piston means 35 which is disposed in a cylinder bore 36 and which has a piston rod 37 engaging the inwardly facing side of the plate 31 via an opening in the spacer plate 32. The cylinder bore 36 is connectible by a channel 38 to a source of pressure medium. When pressure medium is supplied to the cylinder bore 36, the piston rod 37 is moved outwards, and the pin 29 is placed in a retracted position in the bore 27. When the pressure is relieved, the plate 31 is drawn by means of said bolts and springs into engagement against the outer face of the spacer plate 32 which has such a thickness that the inwardly facing end surface of the pin 29 will then be located on a level with the surface of the shoulder 21.

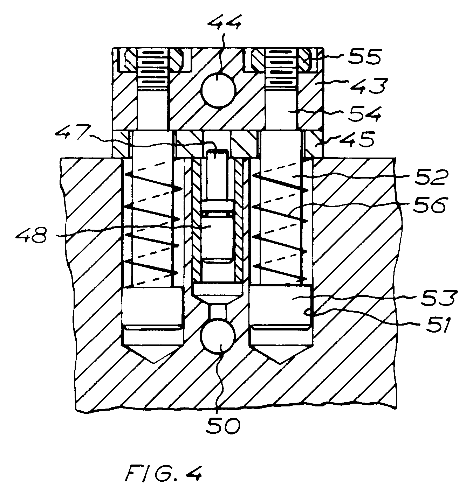

In the bore 28, a nozzle 39 is movable back and forth in substantially the same way as the pin 29. In its inwardly facing end, the nozzle 39 has a valve engaging portion 40 which by a through channel 41 is open to the outwardly facing end of the nozzle. The outwardly facing end of the nozzle 39 is formed of a portion having a smaller diameter than the rest of the nozzle and is externally threaded for screwing in a threaded bore 42 in a plate 43 having a substantially greater thickness than the opposite plate 31. In the bore 42 opens a channel 44 extending at right angles thereto and intended to be connected to a source of pressure medium for the supply of pressure medium to the nozzle 39. Between the plate 43 and the end surface of the block, a spacer plate 45 is provided. Like the plate 32, the spacer plate 45 is fixed to the block by means of countersunk bolts 33 in the plate 45, as indicated in Fig. 3. A nut 46 which can be tightened against the underside of the plate 43 is disposed in an opening in the plate 45. Through another opening therein extends a piston rod 47 of a piston means 48 which is movable back and forth in a cylinder bore 49 communicating with a bore 50 connectible to a source of pressure medium. The plate 43 is maintainted in abutment against the spacer plate 45 by means of the bolt arrangement shown in Fig. 4. Two bores 51 are provided on each side of the cylinder bore 49. In each of the bores 51, there is disposed a bolt 52 which closest to the bottom of the bore 51 has a head 53 which is movable in the bore with easy running fit, and at its opposite end has a narrower, threaded portion 54 extending through a bore in the plate 43 and projecting at the outer side of the plate 43 into a recess where a bolt 55 is screwed on the threaded portion, such that the bolt 52 is fixedly connected to the plate 43 with the shoulder between the head portion and smaller-diameter portion 54 of the bolt engaging the underside of the plate 43. Between the head 53 of the bolt 52 and the underside of the spacer plate 45, there is mounted a spring 56 which by urging the bolt head downwards in Fig. 4 tends to pull the plate 43 into engagement with the upwardly facing side of the plate 45. As earlier intimated, the plate 31 of the pin 29 has two identical bolts 52 on each side of the cylinder bore 36. When pressure medium is supplied to the cylinder bore 49, the piston rod 47 is pressed against the lower face of the plate 43, such that the plate 43 is pressed upwards to a position spaced from the plate 45, and the nozzle 39 is retracted in its bore 28, such that the inwardly facing end surface of the nozzle is on a level with the shoulder 21.

It will be appreciated from the above that pressure medium can be supplied at four points, namely to the channels or bores 26, 38, 44 and 50. The channels 38 and 50 can be supplied with compressed air while the other two channels can be supplied with oil under pressure. Of course, all the channels may be connected to the same hydraulic pressure medium source, the pressure being reduced before being supplied to the channels 38 and 50. It appears from Figs. 2 and 3 that the channels have their connections in one side face of the head, but since in some cases it is more convenient to provide the connections in the end surface of the head, there are provided branch channels opening therein and connected to the first-mentioned ones and being designated 26′, 38′, 44′ and 50′ in Fig. 3. Inlets that are not used can be closed by plugs.

In order to move a locking means 12, the head is placed on the part 15 thereof, as shown in Fig. 1, whereupon pressure medium is supplied to the channel 25, defined by the jacket 23, in the opening 19, and the jacket wall will be urged by the pressure inwardly into solid engagement with the part 15, such that the locking means 12 can be safely moved. It will be realized that the jacket 23 with the channel 25 can be replaced by other locking means of the pneumatic or hydraulic type and that magnetic force can be used for this purpose.

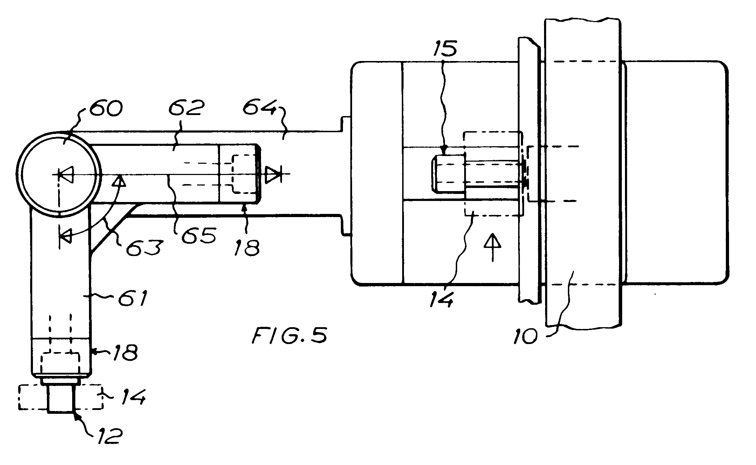

It is essential to provide a device for transporting the head from one location where the locking means 12 is taken up or manually introduced in the opening 19, to another location exactly opposite the spindle 11 from where it can then be placed on the tool spindle. Fig. 5 shows an example of such a device where a column 60 is arranged in front of the machine tool 10. The column is provided with two arms 61, 62 disposed at right angles to each other and mounted by means of a sleeve and being pivotal in a horizontal plane, as indicated by an arrow 63. The column 60 with its arms 61, 62 is horizontally movable by suitable, per se known means along a track 64 through a distance 65 indicated by a double arrow. The column 60 may of course also be stationary and the arms 61, 62 telescopic, such that the head 18 is moved in place by extension of the arm. Since the locking means 12 fits on the tool spindle 11 with a relatively close running fit, it is important that the head moves exactly axially over the tool spindle. In order to facilitate the mounting of the head, it is possible to arrange in the head 18 a vibrator which during the mounting operation is vibrating the head and, thus, the locking means 12 so that this will "flow" onto the tool spindle 11. Another aid in this context is to provide the spindle 11 with a shallow recess at some distance from its outer threaded portion, the recess extending throughout a predetermined length of the spindle.

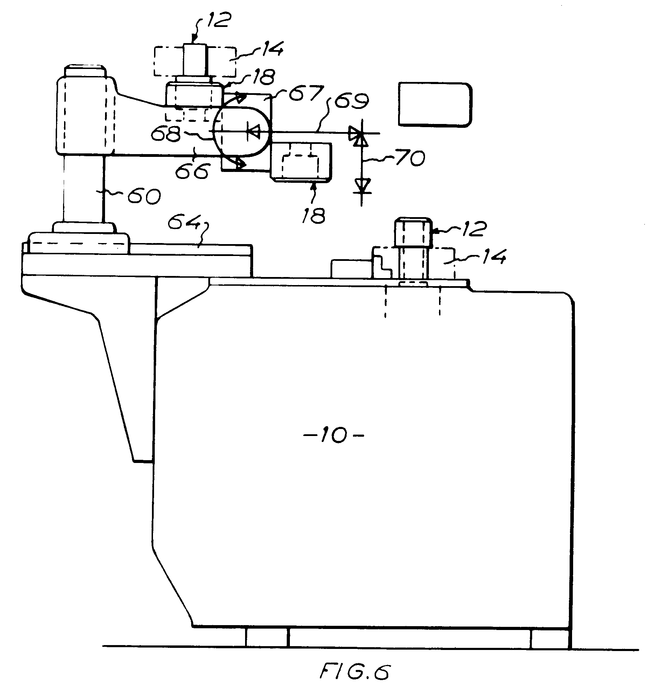

Fig. 6 shows a transport device of another design which is intended especially for placing locking means on vertical tool spindles. In this case, a column 60 is also movable along a track 64 and carries an arm 66 which by suitable means (not shown) is movable along the column in a vertical plane. At its outer end, the arm 66 has a rotatably mounted holder 67 which carries a head 18 on opposite sides. By horizontally displacing the column 60 through the distance indicated by the double arrow 69 and subsequently displacing the arm 66 along the column 60 downwards through the distance indicated by the double arrow 70, the head 18 is placed on the locking means 12 mounted in the machine 10. The locking means is thereafter released in a manner to be described in greater detail hereinbelow, and removed by the transport device along the arrows 70, 69. Thereafter, the holder 67 is rotated through 180° and a new locking means 12 with a tool 14 can be mounted on the tool spindle. The transport devices in Figs. 5 and 6 are specially conceived for tool changing on horizontal and vertical tool spindles, respectively. Naturally, it is possible to provide a transport device which is usable for both types of spindles. The tool spindles may have a respective transport device, as indicated in Figs. 5 and 6, but it is also possible to provide a common transport device which is movable along the machine. The mounting of a locking means 12 with a tool 14 in a head 18 before a tool change can be carried out manually, but it is of course also possible, by means of the transport device, to move the head 18 along a row of locking means with different tools and pick up the desired tool in the row. Thus, the device is well suited for computer control.

The head described above engages with a locking means 12 of the type indicated in Fig. 1 in the following way. It is assumed that a locking means 12 mounted on a tool spindle 11 should first be removed, and a new locking means 12 with a new tool 14 should then be applied. To this end, the head 18 is moved towards the tool spindle and the locking means 12 and onto the latter. The tolerance between the inner surface of the jacket 23 and the outer surface of the part 15 need not be as close as that of the locking means 12 relative to the tool spindle. If so required, the above-mentioned vibrator may however be used also when placing the head on the part 15. Before the head is placed on the part 15, pressure medium is supplied to the cylinder bore 49, whereby the piston rod 47 is moved outwards into engagement with the plate 43 and lifts it against the action of the springs 56. The nozzle 39 is then retracted in its bore 28, such that the end of the nozzle is on a level with the shoulder 21. It is then seen to it that no pressure is exerted in the cylinder bore 36, such that the bolts 52 pull the plate 31 into engagement with the upper side of the plate 32, whereby the end surface of the pin 29 is also on a level with the shoulder 21. This means that the shoulder 21 is continuous, and the head 18 can then be urged onto the part 15 in any rotational position relative thereto so as to act on the actuating pin 17 of the relief valve, which pin is depressed and acts on the relief valve to relieve the pressure in the cavity of the locking means so as to release it from its engagement with the spindle 11. When the head has been advanced on the locking means until the outwardly facing surface of the part 15 engages the shoulder 21, pressure medium is supplied to the channel 25, whereby the head is clamped on the part 15. Since the locking means 12 has been released from the spindle 11 by actuation of the relief valve by means of the pin 17, the locking means 12 can now be pulled off the spindle 11 and removed, while a new locking means 12 with a tool 14 is at the same time moved up to the position opposite the spindle 11. As this new locking means was previously placed in the head 18, it was however necessary to ensure that the nozzle 39 was located opposite the inlet valve 16 and, hence, the opening 27 for the pin 29 opposite the actuating pin 17 of the relief valve. Accurate positioning may then be facilitated by markings or guide means on the head 18 and the part 15. The new locking means 12 is retained in the head in the same manner as the locking means just removed. The new locking means 12 is placed on the spindle 11, optionally under vibration, and is moved to the final position shown in Fig. 1. If the pin 29 has not previously been retracted, this must now be effected by supply of pressure medium to the cylinder bore 36, such that the piston rod 37 presses the plate 31 upwards to the position shown in Fig. 2, whereby the actuating pin 17 of the relief valve will extend into the opening 27, so that the relief valve is closed. The pressure in the cylinder bore 48 is relieved and the springs 56 pull the plate 43 downwards by means of the bolts 52 into engagement against the plate 45, whereby the nozzle 39 is moved out of its bore and down onto the inlet valve 16, as illustrated in Fig. 1. The nozzle 39 is thereafter supplied through the channel 44 with pressure medium flowing into the cavity of the locking means 12 through the valve 16 and the associated channel. The locking means 12 is then clamped to the spindle 11 in the manner described above. The cylinder bore 48 is thereafter again supplied with pressure medium, such that the nozzle 39 is retracted in its bore 28 away from the valve 16, and the pressure in the channel 25 is relieved, whereby the head 18 is disengaged from the part 15. The head is thereafter removed by means of the transport device and can be provided with a new locking means 12 with a tool 14 before the next tool change.

Sensors of a suitable, conventional design are provided for sensing the movement of the head when being placed on the part 15 of the locking means and for deactivating the drive means, and may also be adapted to activate valves for pressure medium supply and drainage in a correct sequence.

The invention may be modified in several different ways within the scope of the accompanying claims. Especially the head and the transport device can easily be adjusted to different locking means and machine tools.

**Claims**

1. An apparatus for changing tools (14) in machine tools (10) in which the tools (14) are fixed on tool spindles (11) by sleeve-shaped locking means (12) placed on each tool spindle (11) and having a cavity in which a pressure urging the inner wall of the sleeve into engagement with the spindle (11) can be established by the supply of pressure medium via a valve arrangement which includes a supply valve (16) being connected to said cavity for accomplishing said supply of pressure medium, and a relief valve (17) also being connected to said cavity, **characterized** by at least one head (18) which has an engagement device (23) actuable into engagement with the locking means (12), and which is movable by means of a transport device between a position for taking up and delivering locking means (12), and a position adjacent at least one tool spindle (11) in order there to deliver or take up locking means (12), and a valve engaging mechanism (29, 30) which upon activation is adapted to alternatively actuate said relief valve or said supply valve.

2. Apparatus as claimed in claim 1, **characterized** in that the head (18) has an opening (19) which is movable over at least a portion (15) of a locking means (12), and an engagement device (23) in the form of clamping means in the wall of the opening (19) for engaging the periphery of said portion (15).

3. Apparatus as claimed in claim 2, **characterized** in that said clamping means (23) comprise in said opening (19) a jacket (23) which can be urged into engagement with the locking means (12) by supply of pressure medium.

**4.** Apparatus as claimed in any one of the preceding claims, **characterized** in that the valve engaging mechanism of the head (18) is adapted to act on the relief valve by means of a pin (29) movable back and forth and to connect the supply valve (16) to the source of pressure medium by means of a nozzle (39) movable back and forth.

**5.** Apparatus as claimed in claim 4, **characterized** in that the pin (29) and the nozzle (39) are individually movable by means of pressure medium.

**6.** Apparatus as claimed in claim 5, for use in connection with sleeve-shaped locking means (12) having relief and supply valves (17, 16) in its outwardly facing end surface when placed on the tool spindle (11), the actuating pin (17) of the relief valve projecting from the end surface while the supply valve (16) is disposed in a recess in said surface with the outer end in or below the plane of said end surface, **characterized** in that the head (18) is sleeve-shaped having an internal shoulder (21) which has a width corresponding to the thickness of the sleeve wall of the locking means (12), and is provided with two bores (27, 28) one of which accommodates the pin (29) and the other accommodates the nozzle (39), said pin (29) and said nozzle (39) being positionable with their end surface on a level with the inner surface of the shoulder (21) so as to close the bores (27, 28), whereby the shoulder (21) with its inner surface can act on the actuating pin (17) of the relief valve independently of the rotational position of the head (18) relative to the locking means (12), and the nozzle (39) is axially movable out of its bore (28) into engagement with the supply valve (16) to connect this to the source of pressure medium when the head (18) is in a predetermined rotational position relative to the locking means (12), in which position the pin (29) is retracted in its bore (27), so that the actuating pin (17) of the relief valve projects thereinto.

**7.** Apparatus as claimed in claim 6, **characterized** in that piston means (35, 48) are provided in cylinder bores in the head outwardly of the shoulder (21) and, for purposes of actuation, connected to the pin (29) and the nozzle (39), respectively, by yoke means (31, 43).

**8.** Apparatus as claimed in any one of the preceding claims, **characterized** in that the head (18) has a vibrating device for facilitating placing the head on the locking means (12).

**9.** Apparatus as claimed in any one of the preceding claims, **characterized** in that the transport device comprises a holder (67) for at least two heads (18), said holder being rotatably mounted on an arm (66) which is pivotally and/or vertically movably mounted on a stationary or horizontally movable column (60).

**Patentansprüche**

**1.** Vorrichtung zum Wechseln von Werkzeugen (14) in Werkzeugmaschinen (10), in denen die Werkzeuge (14) an Werkzeugspindeln (11) mittels auf jede Werkzeugspindel (11) aufgesteckter, hülsenförmiger Festhaltemittel (12) befestigt sind, welche einen Raum aufweisen, in dem ein auf die Hülseninnenwand zum Eingriff mit der Spindel (11) einwirkender Druck durch Druckmittelzufuhr über eine Ventilanordnung herstellbar ist, die ein mit dem genannten Raum verbundenes, für die Druckmittelzufuhr vorgesehenes Einlassventil (16) und ein ebenfalls mit diesem Raum verbundenes Entlastungsventil (17) umfasst, **gekennzeichnet** durch zumindest einen Kopf (18), der eine zum Eingriff mit den Festhaltemitteln (12) betätigbare Eingriffseinrichtung (23) aufweist und durch eine Fördereinrichtung zwischen einer Position zum Aufnehmen und Abgeben von Festhaltemitteln (12) und einer Position an zumindest einer Werkzeugspindel (11), um dort Festhaltemittel (12) abzugeben oder aufzunehmen, bewegbar ist, sowie einen Ventileingriffsmechanismus (29, 30), der bei Betätigung wechselweise auf das Entlastungsventil und das Einlassventil einwirkt.

**2.** Vorrichtung nach Anspruch 1, dadurch **gekennzeichnet,** dass der Kopf (18) eine Öffnung (19), die über zumindest einen Abschnitt (15) eines Festhaltemittels (12) bewegbar ist, und zum Eingriff mit dem Umfang des genannten Abschnitts (15) eine Eingriffseinrichtung (23) in Form von Einspanngliedern in der Wand der Öffnung (19) aufweist.

**3.** Vorrichtung nach Anspruch 2, dadurch **gekennzeichnet,** dass die Einspannglieder (23) in der Öffnung (19) eine Hülle (23) umfassen, die durch Druckmittelzufuhr zum Eingriff mit den Festhaltemitteln (12) gepresst werden kann.

**4.** Vorrichtung nach einem der vorhergehenden Ansprüche, dadurch **gekennzeichnet,** dass der Ventileingriffsmechanismus des Kopfs (18) mittels eines hin- und her bewegbaren Stifts (29) auf das Entlastungsventil einwirkt und mittels einer hin- und her bewegbaren Düse (39) das Einlassventil (16) mit der Druckmittelquelle verbindet.

5. Vorrichtung nach Anspruch 4, dadurch **gekennzeichnet,** dass der Stift (29) und die Düse (39) durch ein Druckmittel getrennt bewegbar sind.

6. Vorrichtung nach Anspruch 5, für hülsenförmige Festhaltemittel (12) mit Entlastungs- und Einlassventilen (17, 16) in ihrer bei Anbringung an der Werkzeugspindel (11) nach aussen gerichteten Endfläche, wobei der Betätigungsstift (17) des Entlastungsventils über die Endfläche hinausragt, während das Einlassventil (16) in einer Aussparung in der genannten Fläche angeordnet ist und sich sein Aussenende in oder unter der Ebene der Endfläche befindet, dadurch **gekennzeichnet,** dass der Kopf (18) hülsenförmig ist und einen inwendigen Absatz (21) hat, welcher eine Breite entsprechend der Dicke der Hülsenwand des Festhaltemittels (12) hat und zwei Bohrungen (27, 28) aufweist, von denen die eine den Stift (29) und die andere die Düse (39) aufnimmt, wobei zum Verschliessen der Bohrungen (27, 28) der Stift (29) und die Düse (39) mit ihrer Endfläche auf derselben Höhe wie die Innenfläche des Absatzes (21) anbringbar sind, wodurch der Absatz (21) mit seiner Innenfläche unabhängig von der Drehlage des Kopfs (18) im Verhältnis zum Festhaltemittel (12) auf den Betätigungsstift (17) des Entlastungsventils einwirken kann, und die Düse (39) axial aus ihrer Bohrung (28) herausschiebbar ist, um mit dem Einlassventil (16) einzugreifen und dieses an die Druckmittelquelle anzuschliessen, wenn sich der Kopf (18) in einer vorbestimmten Drehlage im Verhältnis zum Festhaltemittel (12) befindet, in welcher Lage der Stift (29) in seine Bohrung (27) zurückgezogen ist und sich der Betätigungsstift (17) des Entlastungsventils somit in diese hineinerstreckt.

7. Vorrichtung nach Anspruch 6, dadurch **gekennzeichnet,** dass Kolbenglieder (35, 48) in Zylinderbohrungen im Kopf ausserhalb des Absatzes (21) angeordnet und zwecks Betätigung mittels Jochglieder (31, 43) mit dem Stift (29) bzw. der Düse (39) verbunden sind.

8. Vorrichtung nach einem der vorhergehenden Ansprüche, dadurch **gekennzeichnet,** dass der Kopf (18) eine Rüttelvorrichtung aufweist, um seine Anbringung am Festhaltemittel (12) zu erleichtern.

9. Vorrichtung nach einem der vorhergehenden Ansprüche, dadurch **gekennzeichnet,** dass die Fördereinrichtung eine Halterung (67) für zumindest zwei Köpfe (18) umfasst, welche an einem Arm (66) drehbar gelagert ist, der an einer ortsfesten oder waagerecht bewegbaren Säule (60) in schwenkbarer und/oder senkrecht bewegbarer Weise angebracht ist.

## Revendications

1. Dispositif de changement d'outils (14) sur des machines-outils (10) dans lesquelles les outils (14) sont montés sur des broches d'outils (11) par des moyens de fixation (12) en forme de manchons placés sur chaque broche d'outil (11) et ayant une cavité dans laquelle une pression sollicitant la paroi intérieure du manchon contre la broche (11) peut être établie par l'alimentation en un fluide sous pression par l'intermédiaire d'un dispositif de soupape comprenant une soupape d'alimentation (16) reliée à ladite cavité afin d'assurer l'alimentation en fluide sous pression, ainsi qu'une soupape de sûreté (17) reliée elle aussi à ladite cavité, **caractérisé** par au moins une tête (18) qui possède un dispositif d'engagement (23) pouvant être actionné de façon à engager lesdits moyens de fixation (12) et qui peut être déplacée par un dispositif de transport entre une position de prise et de distribution de moyens de fixation (12), et une position à proximité d'au moins une broche d'outil (11) afin d'y distribuer ou prendre des moyens de fixation (12), et un mécanisme d'engagement de soupape (29, 30) qui est destiné, lors d'un actionnement, à activer ladite soupape de sûreté ou bien ladite soupape d'alimentation.

2. Dispositif selon la revendication 1, **caractérisé** en ce que la tête (18) possède une ouverture (19) qui est déplaçable sur au moins une partie (15) d'un moyen de fixation (12), et un dispositif d'engagement (23) sous forme de moyens de serrage prévus dans la paroi de l'ouverture (19) afin d'engager la périphérie de ladite partie (15).

3. Dispositif selon la revendication 2, **caractérisé** en ce que lesdits moyens de serrage (23) comprennent, dans ladite ouverture (19), une chemise (23) qui peut être amenée à engager les moyens de fixation (12) par l'alimentation en fluide sous pression.

4. Dispositif selon l'une quelconque des revendications précédentes, **caractérisé** en ce que le mécanisme d'engagement de soupape appartenant à la tête (18) est conçu pour agir sur la soupape de sûreté par l'intermédiaire d'un tenon (29) pouvant se déplacer dans un mouvement de va-et-vient, et pour relier la soupape d'alimentation (16) à la source de fluide sous pression par l'intermédiare d'une tuyère (39) qui elle aussi peut se déplacer dans un mouvement de va-et-vient.

5. Dispositif selon la revendication 4, **caractérisé** en ce que le tenon (29) et la tuyère (39) sont individuellement déplaçables sous l'action du fluide sous pression.

6. Dispositif selon la revendication 5, destiné à être utilisé conjointement avec des moyens de fixation (12) en forme de manchons ayant des soupapes de sûreté et d'alimentation (17, 16) dans la surface d'extrémité tournée vers l'extérieur lorsque montés sur la broche d'outil (11), la tige de commande (17) de la soupape de sûreté faisant saillie de la surface d'extrémité alors que la soupape d'alimentation (16) est disposée dans un évidement pratiqué dans ladite surface, l'extrémité extérieure se trouvant dans ou au-dessous du plan de ladite surface d'extrémité, **caractérisé** en ce que la tête (18) a la forme d'un manchon possédant un épaulement intérieur (21) d'une largeur correspondant à l'épaisseur de la paroi de manchon des moyens de fixation (12), et est pourvue de deux alésages (27, 28) dont l'une reçoit le tenon (29) et l'autre reçoit la tuyère (39), ledit tenon (29) et ladite tuyère (39) pouvant être placés avec leurs surfaces d'extrémité au niveau de la surface intérieure de l'épaulement (21) afin de fermer les alésages (27, 28), ainsi permettant à l'épaulement (21) d'agir, par sa surface intérieure, sur la tige de commande (17) de la soupape de sûreté indépendamment de la position de rotation de la tête (18) par rapport aux moyens de fixation (12), et permettant à la tuyère (39) de se déplacer axialement hors de son alésage (28) pour engager la soupape d'alimentation (16) de façon à relier celle-ci à la source de fluide sous pression lorsque la tête (18) se trouve dans une position de rotation prédéterminée par rapport aux moyens de fixation (12), position dans laquelle le tenon (29) est retiré dans son alésage (27) de façon que la tige de commande (17) de la soupape de sûreté y fasse saillie.

7. Dispositif selon la revendication 6, **caractérisé** en ce que des moyens à piston (35, 48) sont prévus dans des alésages cylindriques pratiqués dans ladite tête à l'extérieur de l'épaulement (21) et, pour des raisons d'actionnement, sont reliés au tenon (29) et à la tuyère (39), respectivement, par des moyens de palonnier (31, 43).

8. Dispositif selon l'une quelconque des revendications précédentes, **caractérisé** en ce que la tête (18) possède un dispositif vibrant conçu pour faciliter la mise en place de la tête sur les moyens de fixation (12).

9. Dispositif selon l'une quelconque des revendication précédentes, **caractérisé** en ce que le dispositif de transport comprend un support (67) pour au moins deux têtes (18), ledit support étant monté rotatif sur un bras (66) qui est monté pivotant et/ou déplaçable verticalement sur une colonne (60) stationnaire ou déplaçable horizontalement.

## FIG. 1

EP 0 229 748 B1

FIG. 2

10

FIG. 3

FIG. 4

FIG.5

FIG.6